Europäisches Patentamt

European Patent Office

Office européen des brevets

(19)

(11) Numéro de publication: **0 335 792**
A1

(12) **DEMANDE DE BREVET EUROPEEN**

(21) Numéro de dépôt: 89400861.4

(22) Date de dépôt: 28.03.89

(51) Int. Cl.⁴: **B 01 D 53/36**
B 01 J 23/84

(30) Priorité: 30.03.88 FR 8804109

(43) Date de publication de la demande:
04.10.89 Bulletin 89/40

(84) Etats contractants désignés:
CH DE ES FR GB IT LI NL SE

(71) Demandeur: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur: **Serayssol, Jean-Marc**
**1, rue des Fontaines**
**F-92310 Sevres (FR)**

(74) Mandataire: **Vesin, Jacques et al**
**L'AIR LIQUIDE, SOCIETE ANONYME POUR L'ETUDE ET L'EXPLOITATION DES PROCEDES GEORGES CLAUDE**
**75, quai d'Orsay**
**F-75321 Paris Cédex 07 (FR)**

(54) Procédé de destruction d'hydrures contenus dans un gaz résiduaire et catalyseur pour sa mise en oeuvre.

(57) La présente invention se rapporte à la destruction d'effluents gazeux toxiques. Le procédé, destiné à l'élimination d'hydrures, tels que le silane, le phophine, l'arsine, etc... dans les gaz résiduaires des fours d'épitaxie ou des enceintes CVD, consiste à mettre ce composé en contact avec un catalyseur solide d'oxydation qui contient un agent réactif, tel que l'oxyde de cuivre et un agent promoteur de réaction, tel que le dioxyde de manganèse. L'hydrure est d'abord adsorbé sur la surface du catalyseur puis entre ensuite en réaction avec l'agent réactif sous l'action du promoteur de réaction pour engendrer une espèce inerte. Pour ceci, l'effluent contenant l'hydrure doit être traité par passage dans une colonne d'adsorption remplie de catalyseur d'oxydation selon un débit tel que la vitesse volumétrique horaire reste de préférence inférieure ou égale à 600 hr⁻¹.

FIG.1

EP 0 335 792 A1

**Description**

## PROCEDE DE DESTRUCTION D'HYDRURES CONTENUS DANS UN GAZ RESIDUAIRE ET CATALYSEUR POUR SA MISE EN OEUVRE

La présente invention concerne un procédé de destruction d'hydrures contenus dans un gaz résiduaire tel qu'un gaz issu d'un four d'épitaxie ou d'une enceinte de dépôt chimique en phase vapeur CVD, dans lequel on met en contact le dit gaz résiduaire avec un catalyseur solide d'oxydation contenant un agent réactif et un agent promoteur de réaction.

Les hydrures volatils tel que le silane, la phosphine, l'arsine, le diborane, etc... sont des gaz chimiques aujourd'hui largement utilisés dans l'industrie électronique, au cours des différentes étapes de réalisation des circuits intégrés de type VLSI.

Le silane, par exemple est utilisé dans l'industrie électronique comme source de silicium. Les réactions chimiques au sein des fours d'épitaxie ou des enceintes CVD ne sont jamais totales et il est fréquent de retrouver à la sortie du réacteur une quantité non négligeable de gaz réactifs présentant encore des propriétés dangereuses.

Il est connu de la demande de brevet japonais N° 61-90726 de traiter les gaz résiduaires contenant des composés de silicium par passage de ceux-ci sur une phase solide composée d'oxyde de cuivre et/ou d'oxyde de zinc, avec une vitesse spécifique des gaz comprise entre 10 et 20 000 $hr^{-1}$ et de préférence comprise entre 50 et 10 000 $hr^{-1}$.

Différents essais réalisés à partir de compositions citées à titre préférentiel dans cette demande de brevet ont montré que la capacité de destruction de ces mélanges reste relativement faible. En effet, on obtient, selon cette demande de brevet, une destruction de l'ordre de 60 à 70 litres de silane par kg de catalyseur employé pour une vitesse spécifique d'environ 860 $hr^{-1}$. En diminuant cette vitesse spécifique entre 10 et 100 $hr^{-1}$ on était donc en droit de s'attendre à une augmentation de la capacité de destruction d'un kg de catalyseur. Or les résultats exposés ci-après ont montré que non seulement cette capacité annoncée de 60 à 70 l/kg n'était pas conservée lorsqu'on diminue la vitesse spécifique du mélange mais qu'au contraire elle diminue fortement, ce qui diminue l'intérêt de ces catalyseurs selon l'art antérieur.

Le but de l'invention est de définir un procédé de destruction d'hydrures dans les gaz résiduaires à l'aide de catalyseurs solides, ayant une capacité de destruction nettement améliorée par rapport aux catalyseurs connus du même type.

Le procédé selon l'invention est caractérisé en ce que ledit catalyseur solide comporte comme agent réactif de 10 à 50 % en poids d'oxyde de cuivre CuO et comme agent promoteur de réaction de 50 à 90 % en poids de dioxyde de manganèse $MnO_2$, de sorte que les hydrures contenus dans les dits gaz résiduaires sont adsorbés à la surface du catalyseur de manière à entrer en réaction avec l'agent réactif à l'aide de l'agent promoteur de réaction et engendrer une espèce oxydée inerte, le débit de gaz résiduaire étant adapté à la quantité de catalyseur traversé par celui-ci, de manière à oxyder substantiellement tous les hydrures présents dans ledit gaz résiduaire.

De préférence, ledit catalyseur solide comporte de 10 à 30 % en poids de CuO et de 70 à 90 % en poids de $MnO_2$. En outre, le dit catalyseur pourra contenir, jusqu'à 30 %, par rapport à son poids total, d'un ou plusieurs autres corps choisis parmi $Al_2O_3$, ZnO, $SiO_2$, $Cr_2O_3$, $CO_3Mn$.

Le gaz résiduaire comporte généralement outre les hydrures à détruire, de l'hydrogène ou un gaz inerte, de préférence choisi parmi l'azote, l'argon, l'hélium, etc... La vitesse spécifique du mélange de gaz doit être comprise généralement entre $1hr^{-1}$ et $1000hr^{-1}$ et de préférence entre 10 et 600$hr^{-1}$.

On a constaté que d'une manière générale la température d'oxydation permettant la destruction des hydrures devait être maintenue à une valeur inférieure à 500° C et de préférence inférieure à 100° C.

Lorsque le gaz inerte est de l'hydrogène, la température d'oxydation doit être de préférence maintenue à une valeur inférieure à 70° C. Il peut être souhaitable dans certains cas de maintenir cette température à une valeur inférieure à la température ambiante. Dans ce cas, on réalisera un refroidissement à l'aide d'un fluide de refroidissement placé autour du lit catalytique formé par le catalyseur d'oxydation .

Ce lit catalytique est généralement disposé dans une enceinte de préférence tubulaire. Selon une caractéristique de l'invention, l'enceinte est constituée d'une pluralité de tubes remplis de catalyseurs d'oxydation, disposés côte à côte dans ladite enceinte.

Lorsqu'on désire refroidir le catalyseur de manière à maintenir la température à une valeur prédéterminée, en particulier lorsqu'il s'agit de maintenir cette température à une valeur inférieure à la température ambiante ou voisine de celle-ci, on fera circuler entre les dits tubes un fluide de refroidissement tel que de l'eau, de l'huile, un liquide cryogénique, un gaz froid, etc.

En pratique, on a constaté que l'enceinte devait comporter de 1 à 30 tubes et de préférence de 10 à 20 tubes disposés côte à côte parallèlement entre eux de manière à obtenir les meilleures performances. L'invention concerne également un catalyseur de destruction d'hydrures par oxydation caractérisé en ce qu'il comporte de 10 à 50 % en poids d'oxyde de cuivre CuO et de 50 à 90 % en poids de dioxyde de manganèse $MnO_2$.

De préférence, il comportera de 10 à 30 % en poids de CuO et de 70 à 90 % en poids de $MnO_2$, et il pourra en outre contenir jusqu'à 30% en poids d'un corps choisi parmi $Al_2O_3$, ZnO, $SiO_2$, $Cr_2O_3$ et/ou $CO_3Mn$.

De manière inattendue, le catalyseur solide défini ci-dessus, permet d'éliminer les hydrures contenus dans les gaz résiduaires avec une capacité de destruction comprise sensiblement entre 30 et 60 litres/kg, pour une vitesse spécifique des gaz inférieure ou égale à 60 hr⁻¹.

L'invention sera mieux comprise à l'aide des exemples de réalisation suivants, donnés à titre non limitatif, conjointement avec les figures qui représentent :

> -la figure 1 une vue schématique du dispositif de mise en oeuvre du procédé d'élimination des hydrures selon l'invention,
>
> -la figure 2 une vue en coupe d'une mode préférentiel d'une enceinte d'oxydation pour la mise en oeuvre du procédé selon l'invention.

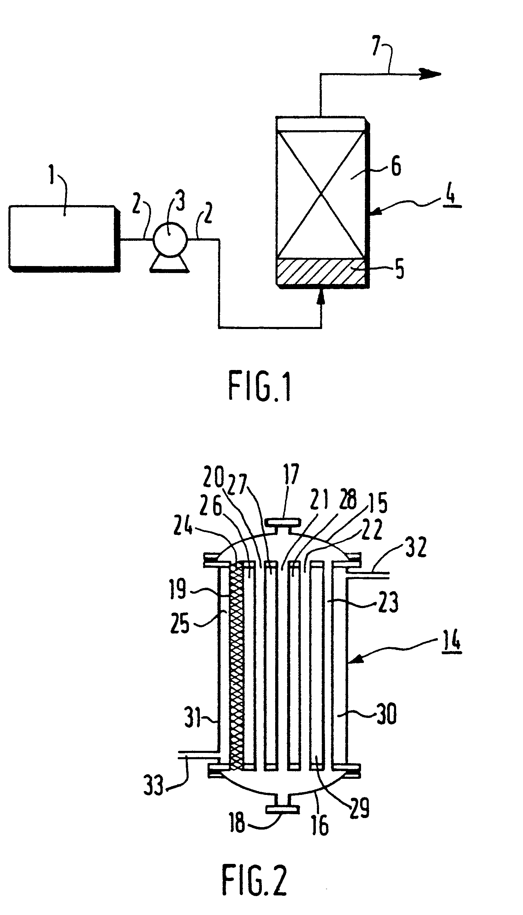

Sur la figure 1, un réacteur d'épitaxie ou une enceinte CVD est relié par l'intermédiaire (si necessaire) d'une pompe 3, à l'aide d'une canalisation 2, à l'entrée inférieure d'une enceinte permettant de mettre en oeuvre le procédé selon l'invention, le gaz issu de cette enceinte étant évacué par la canalisation 7 vers l'extérieur. L'enceinte 4 peut comporter un agent dévésiculeur 5 surmonté d'un lit catalytique 6 constitué d'un mélange en quantité appropriée d'oxyde de cuivre CuO et de dioxyde de manganèse MnO₂ auxquels on aura éventuellement ajouté un corps choisi parmi Al₂O₃, ZnO, SiO₂, Cr₂O₃, CO₃Mn.

La figure 2 représente une vue en coupe d'un exemple préférentiel d'une enceinte tel que l'enceinte 4 de la figure 1, permettant de mettre en oeuvre le procédé selon l'invention, en particulier lorsqu'il est nécessaire de maintenir une température voisine de la température ambiante ou inférieure à celle-ci par des moyens de refroidissement. Cette enceinte comporte une entrée et une sortie des gaz 17,18 (ou vice-versa), chacune étant solidaire d'un couvercle 15, 16 lui même fixé à un corps 31. A l'intérieur du corps sont disposées une pluralité de conduits tubulaires 19, 20, 21, 22, 23 dans lesquels sont logés les constituants du lit catalytique 24, ceux-ci étant maintenus dans le logement tubulaire à chaque extrémité par des moyens adéquats. Entre les dits logements tubulaires, sont prévus des espaces 25, 26, 27, 28, 29, 30 séparant les dits logements, plus ou moins grands selon l'efficacité souhaitée du système ainsi que l'efficacité souhaitée du refroidissement à l'aide d'un fluide de refroidissement qui circule si nécessaire dans les dits logements 25, 26, 27, 28, 29, 30.

Le fluide circule de préférence de l'entrée inférieure 32 vers la sortie supérieure 33 (circulation à co-courant).

Exemples 1 à 8 :

Les exemples 1 à 8 ci-dessous sont des exemples comparatifs, réalisés dans les mêmes conditions toutes choses égales par ailleurs en modifiant la composition du catalyseur selon le tableau indiqué ci-dessous, mais en maintenant une même quantité en poids du dit catalyseur.

Pour chacun des catalyseurs des exemples 1 à 6, on a injecté via la canalisation 2 à l'entrée inférieure de l'enceinte 4 une mélange contenant 10 % de Silane SiH₄ et 90% d'azote, ayant une vitesse spécifique de 30 hr⁻¹, l'enceinte 4 étant une colonne de diamètre 4 cm et de hauteur efficace de 17 cm.

Dans le cas de l'exemple 7, le gaz résiduaire était constitué de 3 % de Silane SiH₄ dans 97 % d'azote, avec une vitesse spécifique des gaz de 34 hr⁻¹, les dits gaz résiduaires étant introduits dans une colonne de diamètre 8 cm et de hauteur efficace de 15 cm.

Pour l'exemple 8, le gaz résiduaire était constitué de 5 % de silane et de 95 % d'azote, avec une vitesse spécifique de gaz de 170hr⁻¹, lesdits gaz résiduaires étant introduits dans une colonne de diamètre 3cm et de hauteur efficace 10 cm.

Les compositions spécifiques des différents réactifs catalyseurs sont mentionnées ci-dessous dans le tableau 1 tandis que les résultats concernant la température maximale observée au sein du catalyseur et la capacité de destruction de ces catalyseurs est représentée dans le tableau 2.

TABLEAU 1

| REACTIF (catalyseur) | COMPOSITION (en poids) |
|---|---|
| 1 | CuO 31 %, Al₂O₃ 2 %, ZnO 67% |
| 2 | CuO 33 %, ZnO 67 % |
| 3 | CuO 68 %, SiO₂ 32 % |
| 4 | CuO 38 %, Cr₂O₃ 37 %, MnO₂ 2 %, SiO₂ 23 % |
| 5 | CuO 22 %, MnO₂ 78 % |
| 6 | CuO 28 %, Mn₂O₃ 72 % |
| 7 | CuO 13 %, MnO₂ 57 %, CO₃Mn 30 % |
| 8 | CuO 41 %, MnO₂ 17 %, SiO₂ 28 %, Carbonate 14 % |

TABLEAU 2

| REACTIF (catalyseur) | DENSITE | TEMPERATURE MAX. du lit catalytique | CAPACITE DE DESTRUCTION |
|---|---|---|---|
| 1 | 1.3g/ml | 64° C | .78 l/kg |
| 2 | 1.16g/ml | 52° C | .24 l/kg |
| 3 | 1.2g/ml | - | aucune destruction |
| 4 | 1.49g/ml | 44° C | .65 l/kg |
| 5 | 0.89g/ml | 88° C | 3.02 l/kg |
| 6 | 0.9g/ml | - | aucune destruction |
| 7 | 1.18g/ml | 42°C | 1.0 l/kg |
| 8 | 0.9g/ml | 60°C | 2.6 l/kg |

Comme on peut le constater du tableau 2, les réactifs 1, 2 et 4 (selon l'art antérieur) donnent des résultats médiocres contrairement à ce que l'on aurait pu attendre de l'enseignement de la demande de brevet japonais susmentionnée, tandis que les réactifs 3 et 6 ne produisent aucune destruction du silane.

Par contre, les réactifs 5 et 7 selon l'invention, procurent une capacité de destruction qui est au moins 10 fois supérieure à la capacité de destruction des exemples 1, 2 et 4 selon l'art antérieur cité ci-dessus.

L'exemple 8 montre que le réactif 8 procure une capacité de destruction qui est nettement inférieure à la capacité de destruction des réactifs utilisés dans les conditions des exemples 5 et 7, du fait d'une rapport $CuO/MnO_2$ trop élevé et d'une vitesse spécifique trop élevée également.

Dans le case des exemples ci-dessus, l'espèce oxydée inerte engendrée par destruction du silane est essentiellement de la silice. Dans le cas de la phosphine et de l'arsine, l'espèce oxydée et essentiellement $As_2 O_3$ et $P_2 O_5$, respectivement.

## Revendications

1.- Procédé de destruction d'hydrures contenus dans un gaz résiduaire tels que les gaz issus d'un four d'épitaxie ou d'une enceinte de dépôt chimique en phase vapeur CVD, dans lequel on met en contact le dit gaz résiduaire avec un catalyseur solide d'oxydation contenant un agent réactif et un agent promoteur de réaction, puis on évacue dans l'atmosphère le gaz résiduaire dans lequel substantiellement tous les hydrures ont été détruits, caractérisé en ce que le dit catalyseur solide comporte comme agent réactif de 10 à 50 % en poids d'oxyde de cuivre CuO et comme agent promoteur de réaction de 50 à 90 % en poids de dioxyde de manganèse $MnO_2$ de sorte que les hydrures contenus dans le dit gaz résiduaire sont adsorbés à la surface du catalyseur de manière à entrer en réaction avec l'agent réactif à l'aide de l'agent promoteur de réaction et engendrer une espèce oxydée inerte, le débit de gaz résiduaire étant adapté à la quantité de catalyseur traversée par celui-ci, de manière à oxyder substantiellement tous les hydrures présents dans ledit gaz résiduaire.

2.- Procédé selon la revendication 1, caractérisé en ce que le dit catalyseur solide comporte de 10 à 30 % en poids de CuO et de 70 à 90 % en poids de $MnO_2$.

3.- Procédé selon la revendication 1 ou 2, caractérisé en ce que le catalyseur d'oxydation contient en outre, jusqu'à 30 % par rapport à son poids total, d'un corps choisi parmi $Al_2O_3$, ZnO, $SiO_2$, $Cr_2O_3$, $CO_3Mn$.

4.- Procédé selon l'une des revendications 1 à 3, caractérisé en ce que le gaz résiduaire est constitué d'un gaz choisi parmi l'hydrogène et les gaz inertes, et des hydrures à détruire.

5.- Procédé selon la revendication 4, caractérisé en ce que le gaz inerte est choisi parmi l'azote, l'argon et l'hélium.

6.- Procédé selon l'une des revendications 1 à 5, dans lequel le catalyseur forme un lit catalytique caractérisé en ce que la température d'oxydation est maintenue inférieure à 500° C et de préférence inférieure à 100° C.

7.- Procédé selon la revendication 1 à 6, caractérisé en ce que lorsque le gaz inerte est de l'hydrogène, la température d'oxydation est maintenue à une valeur qui n'est pas sensiblement supérieure à la température ambiante.

8.- Procédé selon l'une des revendications 6 ou 7, caractérisé en ce que la température d'oxydation est maintenue au dessous d'une valeur prédéterminée par refroidissement à l'aide d'un fluide placé autour du lit catalytique.

9.- Procédé selon l'une des revendications 1 à 8, caractérisé en ce que le lit catalytique formant le catalyseur d'oxydation est disposé dans une enceinte, de préférence tubulaire.

10.- Procédé selon la revendication 9, caractérisé en ce que l'enceinte est constituée par une pluralité de tubes remplis de catalyseur d'oxydation, disposés côte à côte.

11.- Procédé selon la revendication 10, caractérisé en ce que des espaces sont ménagés entre les dits tubes de manière à faire circuler entre eux un fluide de refroidissement tel que de l'eau, de l'huile, un liquide cryogénique, et/ou un gaz froid.

12.- Procédé selon l'une des revendications 10 ou 11, caractérisé en ce que l'enceinte comporte de 1 à 30 tubes et de préférence de 10 à 20 tubes disposés parallèlement entre eux.

13.- Catalyseur de destruction d'hydrures par oxydation, caractérisé en ce qu'il comporte de 10 à 50 % en poids de CuO et de 50 à 90 % en poids de $MnO_2$.

14.- Catalyseur selon la revendication 13, caractérisé en ce qu'il comporte de 10 à 30 % en poids de CuO et de 70 à 90 % en poids de $MnO_2$.

15.- Catalyseur selon l'une des revendications 13 ou 14, caractérisé en ce qu'il comporte en outre jusqu'à 30 % en poids d'un corps choisi parmi $Al_2O_3$, $ZnO$, $SiO_2$, $Cr_2O_3$, $CO_3Mn$.

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 194 366 (JAPAN PIONICS)<br>* Revendication 1 *<br>--- | 1,3 | B 01 D 53/36<br>B 01 J 23/84 |
| A | US-A-3 812 653 (F.E. MASSOTH)<br>--- | | |
| A | FR-A-2 332 969 (P.P.G. INDUSTRIES)<br>----- | | |

DOMAINES TECHNIQUES RECHERCHES (Int. Cl.4)

B 01 D
B 01 J

Le présent rapport a été établi pour toutes les revendications

| Lieu de la recherche | Date d'achèvement de la recherche | Examinateur |
|---|---|---|
| LA HAYE | 22-06-1989 | BOGAERTS M.L.M. |

EPO FORM 1503 03.82 (P0402)